# EUROPÄISCHE PATENTSCHRIFT

(11) **EP 2 002 103 B1**
(45) Veröffentlichungstag und Bekanntmachung des Hinweises auf die Patenterteilung: **17.10.2018**
(21) Anmeldenummer: 07711935.2
(22) Anmeldetag: 13.03.2007
(51) Int. Cl.: F02D 41/38, F02D 41/40, F02D 35/02, F02D 41/02, F02M 45/12

(54) **EINSPRITZVERFAHREN UND ZUGEHÖRIGE VERBRENNUNGSKRAFTMASCHINE**
INJECTION METHOD AND ASSOCIATED INTERNAL COMBUSTION ENGINE
PROCEDE D'INJECTION ET MOTEUR A COMBUSTION INTERNE ASSOCIE

(30) Priorität: 31.03.2006 DE 102006015503
(43) Veröffentlichungstag der Anmeldung: 17.12.2008
(73) Patentinhaber: Fev Europe GmbH, 52078 Aachen (DE)
(72) Erfinder: THORSTEN, Schnorbus, 52072 Aachen (DE); LAMPING, Matthias, 52074 Aachen (DE)
(74) Vertreter: Brandt, Maximilian
(86) Internationale Anmeldenummer: PCT/EP2007/002195
(87) Internationale Veröffentlichungsnummer: WO 2007/115630

(56) Entgegenhaltungen:
- EP-A1- 0 411 321
- EP-A2- 0 740 067
- EP-A2- 1 403 495
- WO-A-2005/005813
- GB-A- 2 365 541
- US-A1- 2002 020 388
- US-B1- 6 850 832

## Beschreibung

Die Erfindung betrifft ein Verfahren zur Regelung eines Einspritzvorganges einer Verbrennungskraftmaschine, vorzugsweise einer direkteinspritzenden Verbrennungskraftmaschine eines Fahrzeugs sowie eine zugehörige Verbrennungskraftmaschine selbst.

Direkteinspritzende Verbrennungskraftmaschinen sind insbesondere im Kraftfahrzeugbereich weit verbreitet und unterliegen immer stärkeren Anstrengungen hinsichtlich Emissionscharakteristik, Verbrauch und Geräuschentwicklung. Neben einer kennfeldgesteuerten Einspritzung von Kraftstoff ist es beispielsweise aus der DE 197 498 17 A1 bekannt, den Einspritzbeginn und die Verbrennungslage aus einer Differenz zwischen einem gemessenen Druckverlauf und einem berechneten Druckverlauf zu ermitteln. Des Weiteren ist es beispielsweise aus der WO 2005/005813 A2 bekannt, aus einer erfassten Zustandsgröße im Zylinder als Stellgröße einen Zeitpunkt der Kraftstoffeinspritzung von mindestens einem Einspritzereignis und/oder einen Inertgasanteil in einem Zylinder einzustellen. Ein ähnliches Verfahren offenbart auch die US 2002/0020388 A1. Die EP 0 740 067 A2 wiederum offenbart ein Einspritzsystem, mit welchem ein innerhalb eines Einspritzzyklus zeitlich veränderlicher Einspritzdruck einstellbar ist.

Aufgabe der vorliegenden Erfindung ist es, einen Verbrennungsvorgang insbesondere hinsichtlich einer Emissionscharakteristik und/oder einer Geräuschentwicklung zu verbessern.

Diese Aufgabe wird gelöst durch ein Verfahren zur Regelung eines Einspritzverlaufes mit den Merkmalen des Anspruches 1 sowie mit einer direkteinspritzenden Verbrennungskraftmaschine eines Fahrzeuges mit den Merkmalen des Anspruches 7. Vorteilhafte Ausgestaltungen und Weiterbildungen sind in den jeweiligen abhängigen Patentansprüchen angegeben.

Insbesondere wird die Aufgabe gelöst durch ein Verfahren zur Regelung eines Einspritzverlaufes einer direkteinspritzenden Verbrennungskraftmaschine eines Fahrzeuges, bei der ein Brennstoff direkt in eine Brennkammer eingespritzt wird, wobei eine Starteinspritzung mit einer konstanten Einspritzrate und mit daran anschließender rampenförmig ansteigender Einspritzrate vorgesehen ist, wobei die Regelung eine Änderung des Einspritzverlaufes zumindest während eines ersten Arbeitszyklus auf Basis zumindest eines während des ersten Arbeitszyklus aufgenommenen Parameters bewirkt, wobei der Parameter mit einem Brennverlauf gekoppelt ist und während des ersten Arbeitszyklus ermittelt wird, wobei der Parameter aus einem Druckverlauf in der Brennkammer während zumindest eines Abschnittes eines Zyklus ermittelt wird und aus dem Druckverlauf ein Brennbeginn in der Brennkammer detektiert wird, wobei die Einspritzrate bei dem detektierten Beginn der Verbrennung rampenförmig ansteigt, und wobei im Rahmen der Regelung die Einspritzrate veränderbar an die jeweils im Zylinder vorliegende Situation angepasst wird, wobei die Steigung der Einspritzrate angepasst wird.

Ein Einspritzverlauf kann beispielsweise dahingehend geändert werden, dass eine Einspritzrate geändert wird. Es kann ebenfalls vorgesehen sein, dass eine Einspritzzeit geändert wird. Im Folgenden werden verschiedenste Möglichkeiten aufgezeigt, wie der Einspritzverlauf veränderbar ist. Die dabei vorgestellten Möglichkeiten sind einzeln wie auch untereinander kombinierbar einsetzbar und insbesondere nicht beschränkt in ihrer Kombination auszulegen.

Vorzugsweise ermöglicht dies, die Einspritzcharakteristik zur positiven Beeinflussung von Emissionen und Geräuschen anzupassen. Insbesondere kann die Einspritzcharakteristik instationär innerhalb eines Betriebspunktes angepasst werden. Vorteilhafterweise können unterschiedliche Einspritzmengen ausgeglichen werden, welche durch Fertigungstoleranzen des Einspritzsystems bedingt sind. Des Weiteren vereinfacht das Verfahren vorzugsweise eine Anpassung an andere Betriebsarten, wie beispielsweise eine Regeneration eines Diesel-Rußpartikelfilters. Weiterhin kann vorzugsweise ein späterer Verbrennungsschwerpunkt stabil betrieben werden. Bevorzugt wird die Möglichkeit eröffnet, zwischen verschiedenen Betriebsarten drehmomentneutral umschalten zu können.

Gemäß einer Weiterbildung wird bei der Verbrennungskraftmaschine eines Fahrzeuges, bei der ein Brennstoff eingespritzt wird, eine Regelung vorgesehen, bei der zumindest ein mit einem Verlauf, insbesondere einem Verbrennungsverlauf in Zusammenhang stehender erster Parameter während eines ersten Verbrennungszyklus ermittelt wird, ein Vergleich des ersten Parameter mit einem vorgebbaren zweiten Parameter erfolgt und über den Vergleich, insbesondere über eine Abweichung zwischen den beiden Parametern, eine Anpassung einer Einspritzung erfolgt. Vorzugsweise wird der vorgebbare zweite Parameter in Abhängigkeit von zumindest Emissionsverhalten, Kraftstoffverbrauch und Verbrennungsgeräusch ermittelt.

Vorzugsweise erfolgt die Anpassung zeitlich und/oder mengenmäßig. Hierbei kann der zeitliche Verlauf wie auch der Volumenstrom der Einspritzung selbst verändert werden. Neben einem Einspritzverlauf bzw. einer Einspritzcharakteristik wird beispielsweise auch ein optimierter Einspritzdruck, ein Raildruck, ein Ladedruck, eine Saugrohrtemperatur, eine Abgastemperatur, ein Inertgasanteil, eine Ladungsbewegung in einem Zylinder und/oder eine Luftmenge berechnet und an jeweilige Stellglieder der Verbrennungskraftmaschine übergeben. Sind einzelne komplette Zylinderdruckverläufe bzw. Heizverläufe nicht zur Verfügung, können auch einzelne Charakteristika und/oder Abschnitte genutzt werden. Dieses wird weiter unten näher ausgeführt.

Beispielsweise kann die Einspritzung in einem ersten Verbrennungszyklus in Abhängigkeit von dem während des ersten Verbrennungszyklusses aufgenommenen Parameter geändert werden. Gemäß einer weiteren Weiterbildung ist vorgesehen, dass auf Basis des ermittelten ersten Parameters aus dem ersten Verbrennungszyklus zumindest eine Einspritzung eines nachfolgenden Verbrennungszyklusses geändert wird. Diese kann der direkt nachfolgende oder auch ein späterer Verbrennungszyklus sein. Insofern kann es vorgesehen sein, dass auf Basis des aufgenommenen Parameters aus dem ersten Arbeitszyklus zumindest zusätzlich ein Einspritzverlauf eines nachfolgenden Arbeitszyklus geändert wird, wobei die Regelung den Einspritzverlauf im ersten und in einem direkt nachfolgendem zweiten Arbeitszyklus verändert. Weiterhin kann vorgesehen sein, dass der zweite Parameter einer lastabhängigen und drehzahlabhängigen Optimierung folgt. Beispielsweise kann hierfür vorgesehen sein, dass ein gewünschter Verlauf für diesen zweiten Parameter hierfür zumindest teilweise während eines Teststandlaufs der Verbrennungskraftmaschine ermittelt wurden und Ober adaptive Verfahren auf entsprechend optimierte Werte als SOLLWerte geschlossen werden kann.

Zumindest ein für wenigstens einen ersten Zylinder erzeugten Wert der Regelung der Einspritzung wird vorzugsweise auch für wenigstens einen zweiten Zylinders verwendet. Hierbei wird von der Vorstellung ausgegangen, dass zumindest ein Teil der Zylinder der Verbrennungskraftmaschine gleich betrieben werden und daher zumindest annähernd gleiche Betriebsbedingungen in den jeweiligen Zylindern vorliegen. Diese Betriebsbedingungen können je nach Verbrennungskraftmaschine auch voneinander abweichen. Dieses kann beispielsweise durch unterschiedliche Kühlung, durch verschiedene Steuerzeiten wie auch durch unterschiedliche Restgasbefüllung oder durch eine partielle Zylinderabschaltung hervorgerufen werden. Zum Ausgleich verschiedener Einflussfaktoren besteht daher die Möglichkeit, aus der Betrachtung verschiedener Zylinder und der jeweils hervorgerufenen Anpassungen eine mittlere Anpassung zu ermitteln, die insbesondere auch als ein Vorsteuerwert für eine Regelung des jeweils nachfolgenden Verbrennungszyklusses eingesetzt werden kann.

Vorzugsweise ist vorgesehen, dass der erste und der zweite Parameter als Parameterverlauf aufgenommen und miteinander verglichen werden. Beispielweise wird ein Zylinderdruck überwacht, um daraus einen Parameterverlauf zu gewinnen, der in die Regelung eingeht und eine Änderung der Einspritzung bewirkt. Auch kann nur zumindest ein Abschnitt eines Brennverlaufs zur Ermittlung der Anpassung herangezogen werden. Beispielsweise wird zumindest ein Abschnitt eines Temperaturverlaufs, ein Abschnitt eines Polytropenkoeffizientenverlaufs und/oder ein Abschnitt eines Heizverlaufs zur Ermittlung der Anpassung herangezogen. Eine weitere Ausgestaltung sieht vor, dass aus einem Verlauf, insbesondere aus einem Zylinderdruckverlauf, ein Wert ermittelt wird, der zur Anpassung einer Gesamteinspritzmenge der Einspritzung in einem Verbrennungszyklus erhöht oder erniedrigt wird. Auch kann vorgesehen sein, dass aus dem Zylinderdruckverlauf ein Mitteldruck berechnet und weiterverarbeitet wird. Beispielsweise kann zur Anpassung einer Gesamteinspritzmenge aus dem Zylinderdruckverlauf der Mittelwert berechnet und durch dessen Erhöhen und Erniedrigen die Gesamteinspritzmenge einem vorgegebenen Wert angenähert werden. Eine Aufteilung der Gesamteinspritzmenge erfolgt beispielsweise durch eine Vorgabe des Einspritzverlaufs bzw. der Einspritzcharakteristik. Eine weitere Ausgestaltung sieht vor, dass zur Ermittlung der Anpassung ein vollständiger Verlauf des Parameters genutzt wird. Vorzugsweise ist hierbei unter Verlauf das zeitliche Verhalten des Parameters über die Dauer eines Verbrennungsverlaufs eines Arbeitszyklus zu verstehen. Eine Weiterbildung betrachtet den zeitlichen Verlauf des Parameters über einen gesamten Arbeitszyklus, um daraus die Anpassung für den nächsten Verbrennungsverlauf zu gewinnen.

Vorzugsweise werden aus einem Verlauf ein oder mehrere charakteristische Merkmale ausgewählt und zur Anpassung der Einspritzung genutzt, wobei das charakteristische Merkmal aus der Gruppe gewählt wird, die zumindest umfasst: gebildeter Mittelwert, Steigung einer Tangente, Maximum, Minimum, Beginn, Ende und/oder Dauer jeweils bezogen auf den Verlauf. Entsprechende Charakteristika können beispielsweise ohne abschließend zu sein ein Brennbeginn, eine Brenndauer, ein Brennende einzelner Einspritzereignisse, ein Mittelwert eines Verbrennungsdruckes, ein Wert und/oder eine Position eines maximalen Druckanstiegs, ein Maximum und/oder Minimum des Brenn-, Heiz- und/oder Zylinderdruckverlaufes, eine Position des Maximums und/oder des Minimums des Brenn-, Helz- und/oder Zylinderdruckverlaufes, eine Position eines beliebigen Massenumsatzpunktes der Verbrennung, die Verbrennungslage, das Verbrennungsgeräusch und/oder die Steigung einer Tangente an einem beliebigen Punkt des Brennverlaufs sein. Zur Anpassung wird bevorzugt zumindest ein auf die Verbrennungskraftmaschine, vorzugsweise auf einen speziellen Zylinder bezogener Massenstrom, ein Druck und/oder eine Temperatur geändert. Insbesondere kann mittels der Anpassung bewirkt werden, dass ein Einspritzdruck, ein Raildruck, ein Ladedruck, eine Saugrohrtemperatur, eine Abgastemperatur, eine Ladungsbewegung In einem Zylinder und/oder eine Luftmenge der Verbrennungskraftmaschine geändert wird.

Die Anpassung nutzt vorzugsweise einen Eingriff in eine Einspritzcharakteristik. Unter dem Begriff Einspritzcharakteristik sind eine Anzahl, ein Abstand, eine Art der Einspritzung wie Ein- oder Mehrlochfreigabe, ein Beginn, ein Ende und/oder eine Dauer von Vor-, Boot-Mehrfach-, Haupt- und/oder Nebeneinspritzung zu verstehen.

Zum Herstellen eines gewünschten Verlaufes des ersten Parameters, zum Beispiel des Zylinderdruckverlaufes oder eines gewünschten Verbrennungsverlaufs werden mehrere verschiedene Werte aus der folgenden Gruppe geändert und vorzugsweise auch angepasst: zum Beispiel Beginn, Dauer, Ende, Art, Anzahl und Zeitpunkte der verschiedenen Etnspritzereignisse sowie deren jeweilige Rate, der Einspritzdruck, Insbesondere ein Raildruck, ein Ladedruck, eine Luftmenge, ein Inertgasanteil und/oder eine Ladungsbewegung in einem der Zylinder, eine Saugrohrtemperatur und/oder eine Abgastemperatur. Vorzugsweise werden Werte wie eine Einspritzrate oder auch eine späte Einspritzung noch im selben Zyklus beelnflusst. Es werden aber gemäß einer Weiterbildung eine Voreinspritzung, eine Voreinspritzmenge, ein Ralldruck sowie weitere der oben aufgezählten Werte jeweils für den nächsten Zyklus angepasst. Insbesondere dann, wenn eine Anpassung dieser Werte noch im vorigen Zyklus nicht mehr möglich war, werden diese im direkt nachfolgenden Zyklus angepasst.

Gemäß einer Weiterbildung ist vorgesehen, dass für diejenigen Werte, die nicht während eines aktuellen Zyklus angepasst werden können, selbstlernende Vorsteuerkennfelder hinterlegt sind. Zum einen entlasten diese einen Regler. Zum anderen tragen diese zu einer Stabilisierung des Systems bei. Darüber hinaus wird ein Zeitgewinn bewirkt, da auf Basis des Lerneffektes auch diejenigen Werte, die ansonsten erst für einen oder mehrere nachfolgende Zyklen beeinflusst werden könnten, nach mehrmaligem Durchfahren einer bestimmten Situation auch schon im aktuellen Zyklus durch eine optimierte Vorsteuerung voreingestellt und optimiert sein können.

Beispielhaft werden im Folgenden drei verschiedene Möglichkeiten aufgezeigt, die jeweils jedoch nicht beschränkend auszulegen sind.

Zum Ersten kann bei Betrieb eines Dieselpartikelfilters in einem Regenerationsbetrieb bei einer detektierten Störung der Verbrennung einer Voreinspritzung vor einer Haupteinspritzung eine zusätzliche Voreinspritzung im selben Verbrennungszyklus erfolgen. Dieses dient als Beispiel für eine Änderung einer Einspritzcharakteristik im selben Zyklus;

Die Verbrennungskraftmaschine befindet sich in einem Regenerationsbetrieb und soll eine hohe Abgastemperatur erzeugen. Dazu ist ein Verbrennungsschwerpunkt von 30° KW nach OT nötig. Die aktuelle Einspritzcharakteristik beinhaltet eine Voreinspritzung bei 10° KW (Kurbelwelle) vor OT (oberer Totpunkt) und eine Haupteinspritzung bei 25° nach OT. Nun wird an einer Abweichung aufgrund eines unzureichenden Brennverlaufs erkannt, dass die aktuellen Bedingungen in einem Zylinder für einen stabilen Betrieb eines so wie vorgesehenen späten Verbrennungsschwerpunktes nicht ausreichend sind. Zur Behebung dieses Mangels sieht die Anpassung vor, dass die Einspritzcharakteristik sofort geändert wird und eine zweite Voreinspritzung kurz vor der Haupteinspritzung vorgenommen wird, um einen Brennverlauf der Haupteinspritzung zu stabilisieren.

Zum Zweiten kann bei Feststellung einer Störung einer Verbrennung einer Voreinspritzung in einem ersten Zylinder eine für den ersten Zylinder getroffene Anpassung auch für einen zweiten Zylinder übernommen werden, bevor dort die Voreinspritzung erfolgten. Dieses ist ein Beispiel für eine Änderung der Einspritzcharakteristik für einen nachfolgenden Zyklus:
Während eines dynamischen Fahrbetriebs wird festgestellt, dass eine Voreinspritzung von einem ersten Zylinder aufgrund von Luftmangel nicht brennt. Zur Korrektur wird die Einspritzcharakteristik soweit geändert, bis die Voreinspritzung wieder brennt. Da der Luftmangel auch für einen, in Zündreihenfolge zweiten Zylinder besteht, wird bereits für den zweiten Zylinder eine zweite Voreinspritzung vor der bisherigen Voreinspritzung ausgeführt. Diese zweite Voreinspritzung, die zu einem Brennen der ursprünglichen Voreinspritzung führt, wird sodann für alle Zylinder beibehalten, bis der Luftmangel nicht mehr existent ist.

Zum Dritten kann eine Abgasrückführungsrate festgestellt und zur Anpassung eine Erhöhung eines Einspritzdrucks vorgenommen werden. Dieses zeigt die beispielhafte Nutzung bei einer Änderung einer Motorgröße:
Durch einen Fehler des AGR-Ventils steigt die AGR-Rate ungewollt an. Eine Brenndauer einer Haupteinspritzung wird dadurch ungewollt verlängert. Wird diese Abweichung von der SOLL-Brenndauer durch eine Auswertung des Zylinderdruckverlaufs erkannt, erfolgt eine Anhebung des Einspritzdrucks seitens der Anpassung, um die Abweichung zu minimieren. Durch den erhöhten Einspritzdruck steigt der Kraftstoffeintrag pro Grad Kurbelwinkel an und die Verbrennung wird somit beschleunigt. Dieser erhöhte Einspritzdruck wird beibehalten, bis aus der Auswertung des Zylinderdruckverlaufs erkannt wird, dass der Einspritzdruck wieder gesenkt werden kann.

Bei der Verbrennungskraftmaschine handelt es sich vorzugsweise um einen nach dem Otto- oder Dieselverfahren arbeitenden Verbrennungsmotor. Bei einem Dieselmotor handalt es sich insbesondere um einen Hochgeschwindigkeits-, direkteinspritzenden Dieselmotor, auch als Highspeed Direct Injection oder HSDI-Dieselmotor bezeichnet. Dieser ermöglicht insbesondere eine Formung eines Einspritzratenverlaufes. Vorzugsweise kann der Einspritzratenverlauf als Funktion der Zeit eingestellt werden.

Der Verbrennungszyklus ist als Zeitraum eines einzelnen Zylinders zu verstehen, in welchem eine Einspritzung beginnt und eine Verbrennung abgeschlossen wird, d.h. der Verbrennungszyklus liegt innerhalb eines Arbeitszyklus, d.h. eines Zyklus, welcher sich bei einem 4-Takt-Motor über einen Kurbelwellenwinkel von 720° erstreckt. Bei einem 2-Takt-Motor erstreckt sich der Arbeitszyklus insbesondere über einen Kurbelwellenwinkel von 360°. Insbesondere erfolgt eine Regelung des Einspritzverlaufes auf Basis zumindest eines zwischen dem Schließen des Einlasses und dem Öffnen des Auslasses gelegenen Abschnitt eines Arbeitszyklus. Die im folgendem in einem Arbeitszyklus vorgesehen Anpassungen wie auch Regelaktionen können ebenso auch in einem Verbrennungszyklus ablaufen wie auch umgekehrt.

Gemäß einer Weiterbildung gelingt es, Innerhalb von drei Takten eines Zyklus reagieren zu können, zum Beispiel hinsichtlich einer Vor- und/oder Nacheinspritzung, Regeneration eines Filters und dafür benötigten Anfettung eines Abgasgemisches oder Ähnlichem. Beispielsweise kann eine Regeneration eines Partikelfilters, eine Befreiung eines NOₓ-Speicherkatalysators von gespeichertem NOx oder SOₓ oder ein Katalysatorheizen berücksichtigt werden. Vorzugsweise kann innerhalb eines Taktes ein Wert aufgenommen, ausgewertet und dementsprechend noch im gleichen Takt eine Änderung des Einspritzverlaufes bewirkt werden.

Der Parameter wird beispielsweise aus dem Druckverlauf in der Brennkammer während zumindest eines Abschnittes eines Zyklus ermittelt. Beispielsweise wird aus dem Druckverlauf ein Brennbeginn in der Brennkammer detektiert. Vorzugsweise wird der gemessene Druckverlauf mit einem in einem geschleppten Betrieb gemessenen oder berechneten Druckverlauf verglichen und aus einer Abweichung ein Brennbeginn ermittelt. Alternativ oder zusätzlich kann eine Brennfunktionsberechnung erfolgen anhand derer aus dem gemessenen Druckverlauf der Brennbeginn ermittelt wird.

Beispielsweise ist vorgesehen eine Starteinspritzung mit daran anschließender ansteigender Einspritzrate so anzupassen, dass bei dem detektierten Beginn der Verbrennung die Einspritzrate rampenförmig ansteigt. Zum Ende der Einspritzung wird die Einspritzrate vorzugsweise abrupt auf Null gesetzt. Vorzugsweise wird durch eine Steigerung der Einspritzrate bei Brennbeginn eine Turbulenz im Brennraum erhöht. Des Weiteren werden durch ein abruptes Einspritzende vorzugsweise gute Voraussetzungen zur Nachoxidation durch ein heißes Verbrennungsende geschaffen. Der Brennbeginn kann beispielsweise über einen Drucksensor erkannt werden, woraufhin anschließend ein Signal zur Änderung der Einspritzrate von der Regelung erzeugt wird. Vorzugsweise kann so der optimale Einspritzverlauf für Betriebspunkte hoher Last reproduzierbar eingestellt werden. Insbesondere im Bereich mittlerer Last kann es vorteilhaft sein, auf eine Start- und/oder auf eine Voreinspritzung zu verzichten, um günstige Emissionswerte zu erreichen. Insbesondere im instationären Betrieb kann eine Voreinspritzung zur Stabilisierung der Verbrennung oder zur Geräuschoptimierung für kurze Zeit vorgesehen sein.

Alternativ oder zusätzlich zu einer Messung des Brennraumdruckes kann eine Messgröße aus der Gruppe umfassend Temperatur, lonenstrom und Ausgangssignal eines optischen Messprinzips verwendet werden.

Eine weitere Ausgestaltung sieht vor, dass eine isobare Verbrennung zumindest annähern einstellbar ist. Hierbei kann vorgesehen sein, dass ein indizierter Mitteldruck von mindestens 10 bar pₘᵢ vorhanden ist.

Für eine Regelung wird beispielsweise ein PID-Regelverfahren, ein Fuzzy-Regelverfahren oder dergleichen verwendet. Insbesondere weist die Regelung eine Zyklenzeit von wenigen Mikrosekunden auf. Beispielsweise kann die Regelung einer Einspritzrampe vorgesehen sein, deren Start- und Endpunkte anhand zumindest eines während des ersten Zyklus aufgenommen Parameters eingestellt werden. Des Weiteren können auch andere Abhängigkeiten in Abhängigkeit des zumindest einen gemessenen Parameters vorgegeben werden. Insbesondere können Pulslängen und Intensitäten einer Einspritzung eingestellt werden.

Gemäß einer Weiterbildung ist der Parameter mit einem Brennverlauf gekoppelt und wird während des ersten Arbeitszyklus ermittelt. Der Regelparameter Ist beispielsweise aus der Gruppe umfassend Druckanstieg, Spitzendruck, Zündverzug, Spitzendrucklage, Wärmefreisetzung, Umsatzrate und 50%-Umsatzpunkt gewählt.

Beispielsweise wird aus dem Brennverlauf eine Schwerpunktlage der Verbrennung ermittelt.

Zur Regelung des Einspritzverlaufes kann neben dem zumindest einen während des ersten Zyklus aufgenommenen Parameter von der Berücksichtigung weiterer Eingangsgrößen der Regelung Gebrauch gemacht werden. Die weiteren Eingangsgrößen können Insbesondere aus der Gruppe umfassend Ladedruck, Saugrohrtemperatur, Einspritzmenge, Einspritzcharakteristik, Einspritzbeginn, Mitteldruck, Winkelgebersignal und/oder Endstufenausgangsspannung gewählt werden. Des Weiteren kann der Lambda-Wert sowie ein Betriebsmodus berücksichtigt werden. Einspritzmenge und/oder Einspritzcharakteristik können beispielsweise anhand eines Kennfeldes in Verbindung mit einer Fahreranforderung vorgegeben werden. Daneben kann auch eine Abgasrückführungsrate berücksichtigt werden.

Neben der eigentlichen Regelung des Einspritzverlaufes kann der zumindest eine aufgenommene Parameter dazu verwendet werden, eine Gleichstellung aller Zylinder in Bezug auf den Brennverlauf zu verbessern. Beispielsweise wird anhand einer Analyse der gemessenen Mitteldrücke ein Einspritzverlauf so bemessen, dass eine Abweichung eines jeweiligen Einspritzverlaufs der verschiedenen Zylinder untereinander verringert wird.

Gemäß einer Weiterbildung ist vorgesehen, dass eine Nacheinspritzung im ersten Arbeitszyklus in Abhängigkeit von dem während des ersten Arbeitszyklus aufgenommenen Parameter geändert wird. Eine Nacheinspritzung wird beispielsweise für eine Regeneration eines Dieselrußpartikelfilters oder beispielsweise zur Einstellung eines Fettbetriebes verwendet. Vorzugsweise ermöglicht eine angepasste Änderung der Nacheinspritzung und/oder eine in Richtung "spät" verlagerte Haupteinspritzung einen homogenen Momentenaufbau. Insbesondere kann eine variable Einspritzcharakteristik mit einer variablen Anzahl von Piloteinspritzungen stabilisiert werden. Bevorzugt wird eine derartige Einspritzung im Betrieb bei geringer Motorlast gewählt.

In einem Ausführungsbeispiel wird eine Einspritzmengenregelung während des ersten Arbeitszyklus vorgenommen, die zumindest auf zumindest dem im ersten Arbeitszyklus aufgenommenen Parameter basiert, insbesondere durch diesen ausgelöst wird. So kann der Startpunkt einer ansteigenden Einspritzratenrampe durch den erkannten Brennbeginn ausgelöst werden. Alternativ oder kumulativ kann vorgesehen sein, einen Amplitudenfaktor für einen Einspritzratenverlauf aus einem Brennraumdruck, insbesondere aus einem mittleren Brennraumdruck zu ermitteln.

Gemäß einer Ausführungsform ist vorgesehen, dass auf Basis des ermittelten Parameters aus dem ersten Arbeitszyklus zusätzlich zumindest ein Einspritzverlauf eines nachfolgenden Zyklus geändert wird. Beispielsweise wird der ermittelte Regelverlauf ohne weitere Regelung für folgende Zyklen übernommen. Dies kann beispielsweise vorgesehen sein, um in einer übergeordneten Regelschleife mit einer größeren Zeitkonstante, die gegenüber einer Einspritzregelung größeren Totzeiten einer Abgasrückführungsregelung zu berücksichtigen. Des Weiteren kann vorgesehen sein, die in der Regelung ermittelte Steigung der Einspritzratenrampe für einen oder mehrere folgende Zyklen zu übernehmen. Für diesen Fall kann in diesen folgenden Zyklen beispielsweise der Einspritzbeginn und das Einspritzende festgelegt werden. Weiterhin kann vorgesehen sein, eine Amplitude aus dem ersten Zyklus für einen oder weitere folgende Zyklen zu übernehmen.

Gemäß einer Weiterbildung ist vorgesehen, dass die Regelung den Einspritzverlauf im ersten und dem direkt nachfolgenden zweiten Arbeitszyklus verändert. Beispielsweise beginnt die Regelung im ersten Arbeitszyklus und wirkt noch in den zweiten Arbeitszyklus hinein.

Gemäß einer anderen Weiterbildung wird wenigstens ein für wenigstens einen ersten Zylinder erzeugtes Steuersignal für eine Vorsteuerung einer Regelung eines Einspritzverlaufes wenigstens eines zweiten Zylinders verwendet. Dabei wird insbesondere ein Steuersignal in einem Arbeitszyklus des zweiten Zylinders aus einem unmittelbar vorhergehenden Arbeitszyklus des ersten Zylinders ermittelt. Beispielsweise nimmt die Vorsteuerung eine Adaption der Regelung des Einspritzverlaufes des zweiten Zylinders vor. Eine Adaption ist insbesondere bei Variationen bzw. Abweichungen in der Verbrennung zweckmäßig, welche beispielsweise durch Abweichungen im Ladedruck, der Abgasrückführungsrate, der Ladelufttemperatur, der Motortemperatur oder dergleichen hervorgerufen werden. Vorzugsweise wird durch die Vorsteuerung ein Regelaufwand verringert. Die Vorsteuerung nimmt insbesondere abhängig von bestehenden Abweichungen oder Variationen im Betriebszustand des Motors, zum Beispiel abhängig von Variationen des Ladedruckes, eine Anpassung des Einspritzverlaufes vor. Für eine Adaption ist beispielsweise vorgesehen, dass von der Regelung des Einspritzverlaufes eine Variation eines während eines Arbeitszyklus aufgenommenen Parameters erkannt und ausgeregelt wird, wobei der Regeleingriff als Vorsteuerwert gespeichert wird. Tritt eine derartige oder eine ähnliche Variation ein zweites Mal auf, kann für den Regeleingriff auf den gespeicherten Vorsteuerwert zurückgegriffen werden. Im Falle einer Ladedruckabweichung, beispielsweise im instationären Betrieb, wird die sich aus der Ladedruckabweichung ergebende Abweichung der Verbrennungslage herausgeregelt und abhängig von insbesondere der Größe der Ladedruckabweichung in einem Vorsteuerkennfeld hinterlegt. Wenn diese oder eine ähnliche Ladedruckabweichung ein weiteres Mal auftritt, ist die sich einstellende Regelabweichung des Verbrennungsschwerpunktes aufgrund des adaptierten Vorsteuerkennfeldes vorzugsweise von Anfang an kleiner.

Eine Adaption von Vorsteuerwerten erfolgt insbesondere schrittweise. Beispielsweise erfolgt eine Adaption ausgehend von einer ersten Phase einer inbetriebnahme einer Verbrennungskraftmaschine sukzessive während eines Betriebes. Vorzugsweise wird nach einer Anlernzeit eine Regelung in einem weiten Bereich instationärer Arbeitspunkte verbessert.

Zur Erzeugung von Vorsteuerwerten werden beispielsweise Verbrennungskraftmaschinen von Vorserienfahrzeuge mit Drucksensoren ausgestattet und aus Dauerläufen unter variierenden Betriebsbedingungen Vorsteuerwerte gewonnen. Entsprechend können Vorsteuerwerte auch aus einem Prüfstandbetrieb gewonnen werden. Vorzugsweise gehen diese ermittelten Werte in nachfolgend produzierte Serienfahrzeuge ein. Beispielsweise kann dadurch in einem Serienfahrzeug auf einen Drucksensor verzichtet werden.

In einer Ausgestaltung ist vorgesehen, dass eine Zylinderdrucküberwachung ausgeführt wird, um mittels dieser zumindest einen ersten Parameter zu gewinnen, der in die Regelung eingeht, und dass eine Änderung des Einspritzverlaufes bewirkt wird. Mit einer Zylinderdrucküberwachung können insbesondere Parameter aus der Gruppe umfassend Maximaldruck, mittlerer Druck, maximaler Druckanstieg, Schwerpunkt des Druckes in Bezug auf den Kurbelwellenwinkel, Wendepunkt in Bezug auf den Kurbelwellenwinkel und Druckanstieg in Folge eines Beginns der Verbrennung gewählt werden.

Ein Schwerpunkt einer Verbrennung in dem ersten und darauf nachfolgenden Zyklen wird gemäß einer Weiterbildung nach "spät" durch eine Änderung des Einspritzverlaufes verschoben und stabilisiert. Dazu würde beispielsweise eine Haupteinspritzung in Richtung "spät" verschoben. Insbesondere zur Vermeidung von kurzfristig erhöhten Verbrennungsgeräuschen werden eine oder mehrere Voreinspritzungen aktiviert, um einen Druckanstieg zu begrenzen. Vorzugsweise wird durch eine oder mehrere Voreinspritzungen die Neigung zu Aussetzern vermindert und die Verbrennung stabilisiert. Anstelle getrennter Vor- und Haupteinspritzungsimpulse kann eine kontinuierliche Einspritzung unter Verwendung eines insbesondere nach einem Beginn der Zündung ansteigenden Einspritzratenprofils verwendet werden.

In einer Variante nimmt die Regelung eine Änderung des Einspritzverlaufes bei einem Schaltvorgang eines mit der Verbrennungskraftmaschine gekoppelten Getriebes vor. Beispielsweise werden ein Beginn und/oder ein Ende von einer Haupteinspritzung und/oder einer Vor- bzw. Nacheinspritzung zur Erzielung eines harmonischen Momentenaufbaus während eines beim Schalten instationären Motorbetriebes angepasst. Insbesondere wird bei einem instationären Motorbetrieb, bei welchem es oftmals zu hohen Abgasrückführungsraten mit zu starker Verschleppung der Verbrennung kommen kann, ein disharmonischer Momentenaufbau vermindert. Des Weiteren werden vorzugsweise zu hohe Kohlenwasserstoffraten vermindert.

Die Erfindung betrifft weiterhin eine direkteinspritzende Verbrennungskraftmaschine eines Fahrzeuges mit zumindest einer Einspritzvorrichtung zur Einspritzung von Brennstoff in eine jeweilige Brennkammer des Fahrzeugs, mit einer Regeleinheit zur Regelung der Einspritzung, mit zumindest einem einer Brennkammer zugeordneten Sensor, der einen ersten Parameter aufnimmt, der mit einem Brennverlauf in der Brennkammer gekoppelt ist, wobei der Sensor mit der Regeleinheit verbunden ist, wobei die Einspritzvorrichtung, die Regeleinheit und der Sensor jeweils derart kurze Reaktionszeiten aufweisen, dass deren Summe kleiner ist als eine Zeitdauer eines ersten Arbeitszyklus, vorzugsweise ein Verbrennungszyklus, in dem die Regeleinheit eine Regelung eines Einspritzverlaufes vornimmt, basierend auf zumindest dem durch den Sensor aufgenommenen ersten Parameter.

Gemäß einer Ausgestaltung ist dieses Verhältnis der Summe der Reaktionszeiten zu der Zeitdauer des Arbeitszyklus über den gesamten Betriebsbereich der Verbrennungskraftmaschine vorhanden. Gemäß einer anderen Ausgestaltung ist diese Bedingung nur in einem oder mehreren Betriebsbereichen der Verbrennungskraftmaschine vorhanden. Des Weiteren besteht die Möglichkeit, dass eine Reaktionszeit von zumindest einer der zu beachtenden Komponenten geändert wird. So kann aufgrund dieser Änderung im gleichen Betriebsbereich einmal die Bedingung erfüllt und einmal nicht erfüllt werden. Vorzugsweise wird eine Änderung der Reaktionszeit vorgenommen, wenn sich ansonsten eine zu hohe Betastung einstellt, beispielsweise bei einer der Komponenten oder auch im Rahmen der Datenübertragung bzw. Datenweiterverarbeitung.

Eine Weiterbildung sieht vor, dass die Verbrennungskraftmaschine, vorzugsweise eine direkteinspritzende Verbrennungskraftmaschine eines Fahrzeuges, mit zumindest einer Einspritzvorrichtung zur Einspritzung von Brennstoff versehen ist, insbesondere in eine jeweilige Brennkammer des Fahrzeuges, mit zumindest einer Regeleinheit und mit zumindest einem Sensor versehen ist, der den ersten Parameter während eines ersten Verbrennungszyklus aufnimmt, und der erste Parameter mit einem Verlauf, vorzugsweise einem Brennverlauf in der Brennkammer gekoppelt ist, wobei der Sensor mit der Regeleinheit verbunden ist, um dieser aufgenommene IST-Daten zur Verfügung zu stellen, die Regeleinheit eine Vergleichseinheit aufweist, über die ein Vergleich der IST-Daten mit SOLL-Daten erfolgt, und die Regeleinheit eine Anpassung aufweist, die im Rahmen einer Closed-Loop-Regelung zumindest mit der Einspritzvorrichtung gekoppelt ist, um in Abhängigkeit von dem Ergebnis des Vergleichs eine Anpassung der IST-Daten an die Soll-Daten innerhalb des ersten Verbrennungszyklus auszuführen.

Gemäß einer Ausgestaltung wird zumindest ein Sensor verwendet, der ein kontinuierlich betriebener Sensor zur Aufnahme eines Parameterverlaufs ist. Vorzugsweise werden alle Sensoren zur Aufnahme des ersten Parameters kontinuierlich über einen Verbrennungsverlauf betrieben. Gemäß einer Weiterbildung ist zumindest einer, insbesondere alle Sensoren als getaktet betriebene Sensoren eingesetzt, die vorzugsweise diskrete Parameterwerte aufnehmen. Auch können sie nur Abschnitte eines gewünschten Verlaufes aufnehmen.

Als Einspritzvorrichtung in der vorzugsweise nach dem Otto- oder Dieselprinzip arbeitenden Verbrennungskraftmaschine wird insbesondere ein Hochdruckinjektor verwendet. Die Einspritzvorrichtung arbeitet dabei vorzugsweise mit Drücken von wenigstens 1 Kilobar, vorzugsweise wenigstens 1,5 Kilobar. Die Elnspritzvorrichtung arbeitet vorzugsweise nach dem "Common Rail"-Prinzip. Eine Reaktionszeit eines Ansteuerventils liegt vorzugsweise unterhalb von 0,2 Millisekunden für den Zeitbedarf zwischen Ansteuerbeginn bis zum Offenstehen. In Verbindung mit einer Trägheit einer Düsennadel werden vorzugsweise Totzeiten unterhalb von 0,6 Millisekunden und bevorzugt unterhalb von 0,2 Millisekunden erreicht. Vorzugsweise werden Injektoren verwendet, die nach dem piezoelektrischen Prinzip arbeiten. Damit liegen die Reaktionszeiten der Einspritzvorrichtung deutlich unter dem Zeitbedarf von 20 Millisekunden einer vollständigen Umdrehung der Kurbelwelle bei einer Umdrehungszahl von 3000 Umdrehungen pro Minute, die hier beispielhaft genannt ist. Insbesondere liegt die Reaktionszeit auch deutlich unterhalb der Zeitdauer eines Verbrennungsvorganges etwa bei 8 Millisekunden im vorliegenden Beispiel von 3000 Umdrehungen pro Minute. Des Weiteren liegen die Reaktionszeiten der Einspritzvorrichtung vorzugsweise auch deutlich unterhalb der verwendeten Einspritzdauern von beispielsweise etwa 0,5 bis 3 Millisekunden.

Als Sensor wird vorzugsweise ein Sensor verwendet, welcher auf dem piezoelektrischen Prinzip beruht. Mit diesem wird vorzugsweise ein Druck im Brennraum gemessen. Insbesondere in Verbindung mit anderen Sensoren kann jedoch auch vorgesehen sein, andere Größen der Verbrennung zu vermessen. Beispielsweise kann ein optischer Sensor zur Vermessung einer Verbrennungsintensität verwendet werden. Weiterhin kann ein lonenstromsensor verwendet werden, der einen lonenstrom misst, welcher mit einem Verbrennungsvorgang in Verbindung gebracht werden kann. Insbesondere können verschiedene Sensoren verwendet werden, welche einander ergänzende Informationen liefern. Verschiedene Prinzipien, wie beispielsweise eine Druckmessung prinzipiell erfolgen kann und wie beispielsweise eine Druckmessvorrichtung vorzugsweise in eine Zündkerze integriert ausgeführt werden kann, gehen beispielsweise aus EP 1 637 806 A1, aus US 2005 252297, aus EP 1 519 175 hervor. Auf diese Druckschriften wird diesbezüglich im Rahmen der Offenbarung verwiesen.

Der Parameter ist vorzugsweise aus der Gruppe umfassend mittlerer Brennraumdruck, mittlerer Verbrennungsdruck, Beginn des Verbrennungsvorganges, Druckanstieg infolge des Verbrennungsbeginnes, Schwerpunkt des Druckes, Spitzenwert des Druckes, Änderungsrate des Druckes und Wendepunkt im Druckverlauf gewählt.

Die Brennkammer des Fahrzeuges ist insbesondere so ausgestaltet, dass sie zu einer Homogenisierung der Ladung beiträgt. Einlasssystem und Muldenoberfläche des Kolbens sind vorzugsweise so ausgestaltet, dass eine Tumble- oder Drallerzeugung der Ladung bewirkt wird.

Die Regeleinheit weist vorzugsweise Zyklenzeiten unterhalb von 0,2 Millisekunden auf, was beispielsweise durch eine entsprechend hohe Taktung eines Mikroprozessors gewährleistet wird. Als Ausgangsgröße weist die Regeleinheit beispielsweise einen Spannungsausgang zur Ansteuerung einer Endstufe der Injektorvorrichtung auf. Als Eingangssignal wird insbesondere der von dem Sensor aufgenommene Parameter verwendet. Darüber hinaus kann wenigstens ein weiterer Parameter vorgesehen sein, welcher aus der Gruppe umfassend Ladedruck, Saugrohrtemperatur, Einspritzmenge, Einspritzcharakteristik, Einspritzbeginn, Raildruck, Winkelgebersignal, Betriebsmodus und Endstufenausgangssignal gewählt werden kann. Mit Hilfe der Ausgangsspannung werden insbesondere Einspritzbeginn und Einspritzcharakteristik bzw. Einspritzverlauf gesteuert.

Die Regeleinheit ist insbesondere verbindbar mit einer Speichervorrichtung. In dieser können beispielsweise Kennfelder zur Vorsteuerung bestimmter Betriebszustände hinterlegt sein. Der Speicher kann beispielsweise in einer Motorsteuerung oder aber in der Regeleinheit selbst angeordnet sein. Des Weiteren kann die Regeleinheit in die Motorsteuerung integriert sein.

Gemäß einer Weiterbildung ist die Regeleinheit mit einer Überwachung eines Partikelfilters verbunden, wobei die Regeleinheit den Einspritzverlauf zur Regenerierung des Partikelfilters anpasst. Die Überwachung liefert beispielsweise Informationen über einen Füllgrad des Partikelfilters. Insbesondere erkennt die Überwachung, wann eine Regeneration des Partikelfilters erforderlich ist. Bei einer Regenerierung wird der Einspritzverlauf beispielsweise dahingehend angepasst, dass durch wenigstens eine Nacheinspritzung ein Schwerpunkt der Einspritzrate in Richtung "spät" eingestellt wird. Insbesondere kann gegen Ende des Verbrennungsvorganges wenigstens eine Nacheinspritzung erfolgen.

In einer Ausgestaltung ist vorgesehen, dass die Regeleinheit mit zumindest einer Emissionsüberwachung gekoppelt ist, wobei die Regeleinheit den Einspritzverlauf zur Emissionsminderung anpasst. Die Emissionsüberwachung überwacht Größen aus der Gruppe umfassend Sauerstoffgehalt, Kohlenwasserstoffgehalt, Stickoxidkonzentration, Rußpartikelgröße und Abgastemperatur. Hierzu können beispielsweise Kennfelder unter Verwendung verschiedener Einspritzverläufe aufgezeichnet werden, aus denen dann für die Emission günstige Betriebspunkte ausgewählt werden. Des Weiteren kann vorzugsweise eine Closed-Loop-Regelung erfolgen, wobei die Zyklenzeit der Regelung aufgrund der im Vergleich zum Verbrennungsvorgang größeren Totzeiten des Abgassystemes deutlich größer ist als die Reaktionszeit der Einspritzregelung. Insbesondere ist eine Einspritzregelung mit einer kleinen Zyklenzeit von beispielsweise etwa 0,2 Millisekunden vorgesehen, der eine Emissionsregelung mit einer größeren Zyklenzeit überlagert ist. Die Zyklenzeit der Emissionsüberwachung liegt dabei beispielsweise im Bereich etwa einer Sekunde. Insbesondere kann vorgesehen sein, dass anhand der Emissionsregelung ein Sollwert der Einspritzverlaufsregelung vorgegeben wird.

Gemäß einer Weiterbildung ist eine Zylinderdrucküberwachung vorgesehen, die mit der Regeleinheit gekoppelt ist. Die Zylinderdrucküberwachung überwacht vorzugsweise die Drücke der verschiedenen Zylinder der Verbrennungskraftmaschine. Insbesondere ist die Zylinderdrucküberwachung vorgesehen, um in Verbindung mit der Regeleinheit eine einheitliche Druckentfaltung in den jeweiligen Zylindern der Verbrennungskraftmaschine zu erzielen. Beispielsweise werden Mittel- oder/und Spitzendruck in den jeweiligen Zylindern mittels der Regeleinheit so eingestellt, dass diese in etwa identisch sind. In einer ersten Variante kann vorgesehen sein, eine Regeleinheit und einen Sensor für jeweils einen Zylinder zu verwenden. In einer weiteren Variante kann vorgesehen sein, eine gemeinsame Regeleinheit für mehrere Zylinder der Verbrennungskraftmaschine zu verwenden. In diesem Fall weist die Regeleinheit entsprechende Eingänge für die verschiedenen Sensoren der jeweiligen Zylinder auf. Des Weiteren weist die Regeleinheit in diesem Fall entsprechend verschiedene Ausgänge für die jeweiligen Einspritzvorrichtungen der zugehörigen Zylinder auf. Insbesondere kann vorgesehen sein, in einem ersten Zylinder ermittelten Brennverlauf zur Bemessung eines Einspritzverlaufes in einem zweiten Zylinder einzustellen.

Eine Datenübertragung erfolgt vorzugsweise über einen seriellen Datenbus, wobei vorzugsweise eine Datenübertragungsrate von zumindest 500 kbit/s zur Verfügung gestellt wird.

Gemäß einer Ausgestaltung ist vorgesehen, dass die Einspritzvorrichtung zumindest einen Injektor aufweist, der mit einem Piezoelement gekoppelt Ist. Das Piezoelement Ist dabei vorzugsweise so in den Injektor integriert, dass eine Einspritzdüse mittels eines durch das Piezoelement erzeugten hydraulischen Druckes aus dem Sitz gehoben werden kann. Das Piezoelement ist dabei vorzugsweise so im Injektor Integriert, dass möglichst kurze Leitungen zur Einspritzdüse realisiert werden.

Ein Einspritzverlauf kann auch je nach Bedarf auf jede beliebige Art und Weise, beispielsweise kontinuierlich, mit veränderlicher Rate und/oder durch wenigstens zwei separate Einspritzereignisse erzeugt werden. Die kontinuierliche Erzeugung kann beispielsweise mit einem Injektor, wie dem CORA RS der FEV Motorentechnik GmbH, realisiert werden, dessen Einspritzrate wie auch Einspritzzeiten äußerst flexibel und trotzdem genau einstellbar sind. Näheres zu einem möglichen, bevorzugt einsetzbaren Injektor, seinem Aufbau und zu dessen zugehörigem Einspritzsystem sind aus der DE 100 01 828 und der DE 10 2004 057 610 zu entnehmen, auf die im Rahmen dieser Offenbarung diesbezüglich verwiesen wird. Insbesondere mit einem derartigen Injektor besteht die Möglichkeit, innerhalb eines Arbeitszyklus entsprechend reagieren zu können.

Im Folgenden wird die Erfindung anhand der Zeichnungen im Einzelnen erläutert. Die dort dargestellten Ausgestaltungen sind jedoch nicht beschränkend auszulegen oder auf die einzelne Zeichnung beschränkt. Vielmehr sind jeweils in der Beschreibung einschließlich der Figurenbeschreibung sowie in den Figuren gezeigte Merkmale zu Weiterbildungen miteinander kombinierbar.

Es zeigen:
- Fig. 1:: ein erstes Signalflussschema,
- Fig. 2:: ein zweites Signalflussschema,
- Fig. 3:: ein drittes Signalflussschema,
- Fig. 4:: eine erste Einspritzcharakteristik,
- Fig. 5:: eine zweite Einspritzcharakteristik,
- Fig. 6:: eine dritte Einspritzcharakteristik,
- Fig. 7:: eine vierte Einspritzcharakteristik,
- Fig. 8:: ein viertes Signalflussschema,.
- Fig. 9:: eine Darstellung eines beispielhaften Regelablaufs,
- Fig. 10:: eine Darstellung eines Zylinderdruckverlaufs, eines Einspritzdrucks, eines Nadelhubes einer Einspritzvorrichtung und einer relativen Druckänderung des Zylinderdruckes aufgetragen über den Kurbelwinkel,
- Fig. 11:: eine schematische Darstellung einer Regelung einer Anfangsrate in Abhängigkeit von einer Last und von einem Druckanstieg, und
- Fig. 12:: eine schematische Darstellung einer Regelung eines Einspritzratenanstiegs einer Restmenge bei Brennbeginn.

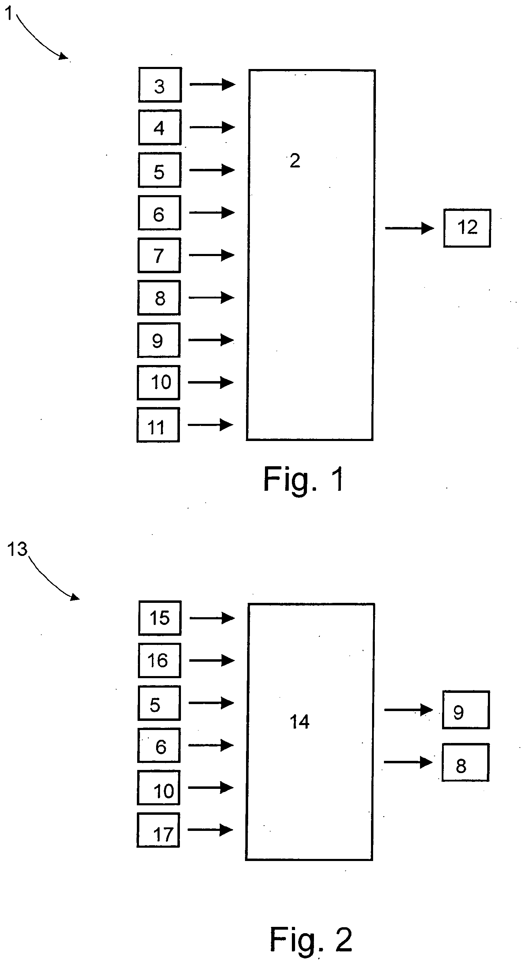

Fig. 1 zeigt ein erstes Signalflussschema 1. Eine Regeleinheit 2 weist verschiedene, nicht im Einzelnen dargestellte Eingänge auf, welche zur Einspeisung eines Druckverlaufes 3, eines Endstufenausganges 4, eines Ladedruckes 5, einer Saugrohrtemperatur 6, einer Einspritzmenge 7, einer Einspritzcharakteristik 8, eines Einspritzbeginnes 9, eines Raildruckes 10 sowie eines Winkelgebersignals 11 vorgesehen sind. Aus diesen Eingangswerten errechnet die Regeleinheit 2 ein Steuersignal 12, welches für eine Steuerung einer Ausgangsspannung einer Endstufe eine Injektoransteuerung vorgesehen ist.

Kern der Regeleinheit 2 ist ein Mikroprozessor, welcher anhand von in einem nicht dargestellten Speicher enthaltenen Regelanweisungen eine entsprechende Regelung vornehmen kann.

Als Bezugspunkt für den Druckverlauf wird vorzugsweise ein Kurbelwellenwinkel herangezogen. Dieser wird beispielsweise mit dem Winkelgeber an die Regeleinheit 2 übermittelt. In einer anderen Ausgestaltung kann auch vorgesehen sein, alternativ oder zusätzlich als Bezug für einen Verlauf die Zeit zu wählen.

Das erste Signalflussschema 1 wird für eine Regelung eines Einspritzverlaufes herangezogen. Gewünschte Einspritzmenge 7 und gewünschter Einspritzbeginn 9 werden beispielsweise aus einem nicht dargestellten Kennfeld gemäß einem ebenfalls nicht dargestellten Fahrerwunsch gewählt.

Mittels des Eingangsparameters Einspritzcharakteristik 8 wird beispielsweise vorgegeben, ob es sich um mehrere Einspritzimpulse oder aber um einen kontinuierlichen Einspritzverlauf handeln soll. Insbesondere kann die Einspritzcharakteristik aus verschiedenen Klassen von Einspritzverläufen gewählt werden.

Im Folgenden werden gleichwirkende Element mit den gleichen Bezugszeichen versehen.

Fig. 2 zeigt ein zweites Signalflussschema 13. Dieses liegt einer Closed-Loop-Regelung eines Einspritzbeginnes zugrunde. Einer zweiten Regeleinheit 14 werden eine Reihe von Eingangsgrößen zugeführt, die im Einzelnen eine Verbrennungsschwerpunktlage 15, ein Lambda-Wert 16, weicher in einem Saugrohr ermittelt wird, ein Ladedruck 5, eine Saugrohrtemperatur 6, ein Raildruck 10 und ein Betriebsmodus 17 sind. Die Verbrennungsschwerpunktlage 15 wird beispielsweise mit Hilfe des Sensors, welcher den Brennraumdruck aufnimmt, in Verbindung mit dem Kurbeldrehwinkelsensor ermittelt. Über den Betriebsmodus ist beispielsweise vorwählbar, in welchem Zustand der Verbrennungsmotor betrieben werden soll. Beispielsweise kann der Verbrennungsmotor in einem Regenerationsbetrieb für einen Dieselrußpartikelfilter betreiben werden. Des Weiteren kann als Betriebsmodus beispielsweise eine fette oder eine magere Verbrennung vorgesehen sein. Eine Vorgabe eines Betriebsmodus erfolgt beispielsweise anhand eines Kennfeldes oder anhand eines Fahrerwunsches.

Als Ausgangsgrößen berechnet die zweite Regeleinheit 14 einen Einspritzbeginn 9 sowie einen Einspritzcharakteristik 8. Diese beiden Ausgangsgrößen können beispielsweise in die erste Regeleinheit 2 aus dem ersten Signalflussschema eingespeist werden. Die Einspritzcharakteristik wird vorzugsweise an den Betriebsmodus angepasst. Beispielsweise ist bei der Verbrennung in einem hochlastigen Betriebspunkt vorgesehen, im direkten Anschluss an eine Starteinspritzung bei Brennbeginn eine Steigerung der Einspritzrate vorzunehmen und die Einspritzung schließlich abrupt enden zu lassen. Bei einem instationären Motorbetrieb mit kurzfristig hohen Abgasrückführungsraten kann dagegen vorgesehen sein, eine Haupteinspritzung in Richtung spät zu verschieben und gegebenenfalls zusätzlich eine Voreinspritzung vorzusehen. Des Weiteren können beispielsweise in einem Regenerationsbetriebsmodus für einen Dieselrußpartikelfilter eine oder mehrer Nacheinspritzungen vorgesehen werden.

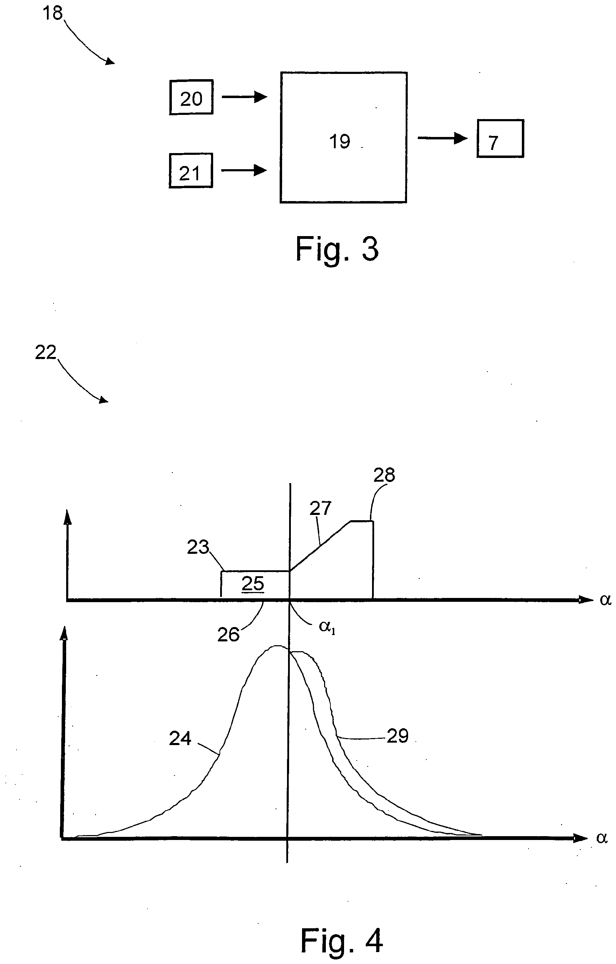

Fig. 3 zeigt ein drittes Signalflussschema 18, welches einer Regelung einer Einspritzmenge zugrunde liegt. Bei dieser Regelung handelt es sich ebenfalls um eine Closed-Loop-Regelung. Einer dritten Regeleinheit 19 werden als Eingangsgrößen ein mittlerer Brennraumdruck 20 sowie ein Fahrerwunsch 21 zugeführt. Der Fahrerwunsch 21 wird beispielsweise aus einer Gaspedalstellung bzw. einer Gaspedalbeschleunigung ermittelt. Insbesondere findet ein gewählter Gang eines Getriebes Berücksichtigung bei der Ermittlung des Fahrerwunsches. Als Ausgangsgröße berechnet die dritte Regeleinheit 19 eine Einspritzmenge 7. Diese kann beispielsweise der ersten Regeleinheit 2 gemäß dem ersten Signalflussschema 1 zugeführt werden. Bei der Ermittlung der Einspritzmenge wird vorzugsweise berücksichtigt, dass sich je nach Betriebszustand, insbesondere je nach Abgasrückführungsrate oder Ladedruck, in Abhängigkeit von der Einspritzmenge ein unterschiedlicher mittlerer Zylinderdruck einstellt. Zusätzlich oder alternativ können auch unterschiedlich sich einstellende Zylinderdrücke berücksichtigt werden. Bevorzugt kann mit einer Regelung einer Einspritzmenge der mittlere Zylinderdruck trotz einer Variation übriger Betriebsparameter wie beispielweise der Abgasrückführungsrate oder des Ladedruckes auf einen gewünschten Wert eingestellt werden.

Die vorstehend dargelegten Regeleinheiten 1, 14, 19 sind jeweils einem Brennraum bzw. einem Zylinder zugeordnet. Dementsprechend ist das Steuersignal 12 zur Ansteuerung eines dem jeweiligen Zylinder zugeordneten Injektors vorgesehen. In einer anderen Variante kann vorgesehen sein, die jeweils einem Zylinder zugeordneten Eingangsgrößen für jeden Zylinder getrennt als Eingangsgröße einer gemeinsamen Regeleinheit vorzusehen. Die übrigen Eingangsgrößen, welche sich für eine Regelung eines Einspritzzulaufes der jeweiligen Brennräume bzw. Zylinder nicht unterscheiden, sind vorzugsweise nur einmal als Eingangsgröße an der gemeinsamen Regeleinheit vorgesehen. Diese der Regelung aller Zylinder gemeinsamen Größe sind insbesondere Raildruck, Ladedruck, Saugrohrtemperatur, Lambda-Wert sowie Betriebsmodus. Entsprechend ist in der nicht dargestellten gemeinsamen Regeleinheit für jeden Zylinder getrennt jeweils ein Steuersignal vorgesehen. Vorzugsweise ist bei Verwendung der gemeinsamen Regeleinheit vorgesehen, dass wenigstens ein für wenigstens einen Zylinder erzeugtes Steuersignal für eine Vorsteuerung einer Regelung wenigstens eines anderen Zylinders verwendet wird.

Fig. 4 zeigt eine erste Einspritzcharakteristik 22. Dargestellt sind ein Einspritzratenverlauf 23 über einem Kurbelwellenwinkel α sowie ein Druckverlauf 24 über dem Kurbelwellenwinkel α. Zu Beginn des Einspritzvorganges ist eine Starteinspritzung 25 vorgesehen, welche eine konstante Einspritzrate über einen ersten Kurbelwellenwinkelabschnitt 26 aufweist. Mit Beginn eines Brennbeginnes am Kurbelwellenwinkel α₁ geht die konstante Rate in eine ansteigende Ratenrampe 27 über. Gegen Ende der Einspritzung wird die Einspritzrate für eine kurze Zeit auf einem konstanten Niveau 28 gehalten, um dann abrupt auf Null abzufallen.

Die Steigerung der Einspritzrate bei Brennbeginn erhöht vorzugsweise eine Turbulenz im Brennraum. Das abrupte Einspritzende bewirkt vorzugsweise, dass infolge eines heißen Verbrennungsendes gute Voraussetzungen zur Nachoxidation bereitgestellt werden.

Der Einspritzratenverlauf 23 korrespondiert mit dem Druckverlauf 24. Infolge der ansteigenden Ratenrampe 27 wird der Druckverlauf 24 jedoch in einem zweiten Druckverlauf 29 fortgesetzt. Dieser zweite Druckverlauf 29 ist gegenüber dem ersten Druckverlauf 24 in Richtung "spät" verschoben.

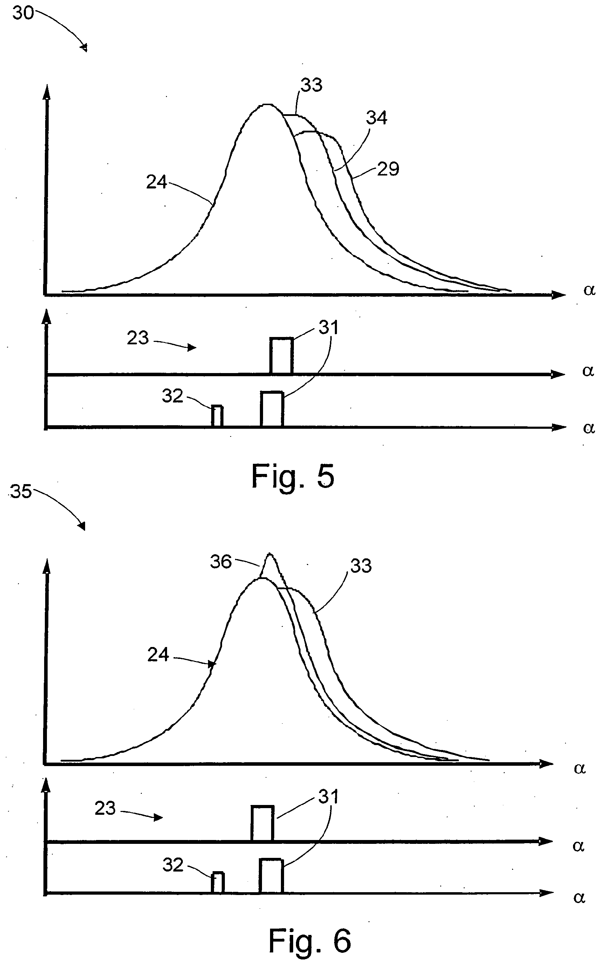

Die Figuren 5, 6 und 7 zeigen Einspritzcharakteristika welche zum Verständnis des erfindungsgemäßen Verfahrens dienen.

Fig. 5 zeigt eine zweite Einspritzcharakteristik 30. Dargestellt sind wiederum ein Druckverlauf 24 sowie ein Einspritzratenverlauf 23. Zur Aussetzervermeidung und zur Stabilisierung der Verbrennung in Verbindung mit einer Verschiebung einer Haupteinspritzung 31 in Richtung spät ist eine Voreinspritzung 32 vorgesehen. Im instationären Motorbetrieb kann es bei kurzfristig zu hohen Abgasrückführungsraten zu einer starken Verschleppung der Verbrennung kommen, die insbesondere zu sehr hohen Kohlenwasserstoffraten als auch zu einem disharmonischen Momentenaufbau führen kann. Dies macht sich in einer deutlichen Abweichung des Druckverlaufes von einem gewünschten Druckverlauf 33 bemerkbar. Im Einzelnen ist ein zweiter Druckverlauf 29 deutlich in Richtung "spät" verschoben. Zur Abhilfe wird eine Haupteinspritzung 31 in Richtung "früh" verschoben, wobei insbesondere zur Aussetzervermeidung und Stabilisierung der Verbrennung instationär eine oder mehrere Voreinspritzungen 32 aktiviert werden. Damit ergibt sich ein korrigierter Druckverlauf 34.

Fig. 6 zeigt eine dritte Einspritzcharakteristik 35. Dargestellt sind wiederum ein Druckverlauf 24 sowie ein Einspritzratenverlauf 23. Bei einem instationären Motorbetrieb mit kurzfristig zu niedrigen Abgasrückführungsraten kann es zu einem steilen Druckanstieg 36 kommen, welcher sich in einer deutlichen Abweichung von einem gewünschten Verlauf 33 bemerkbar macht. Zur Vermeidung von kurzfristig erhöhten Verbrennungsgeräuschen wird zur Abhilfe neben einer Verschiebung einer Haupteinspritzung 31 in Richtung spät eine oder mehrere Voreinspritzungen aktiviert, um den Druckanstieg zu begrenzen.

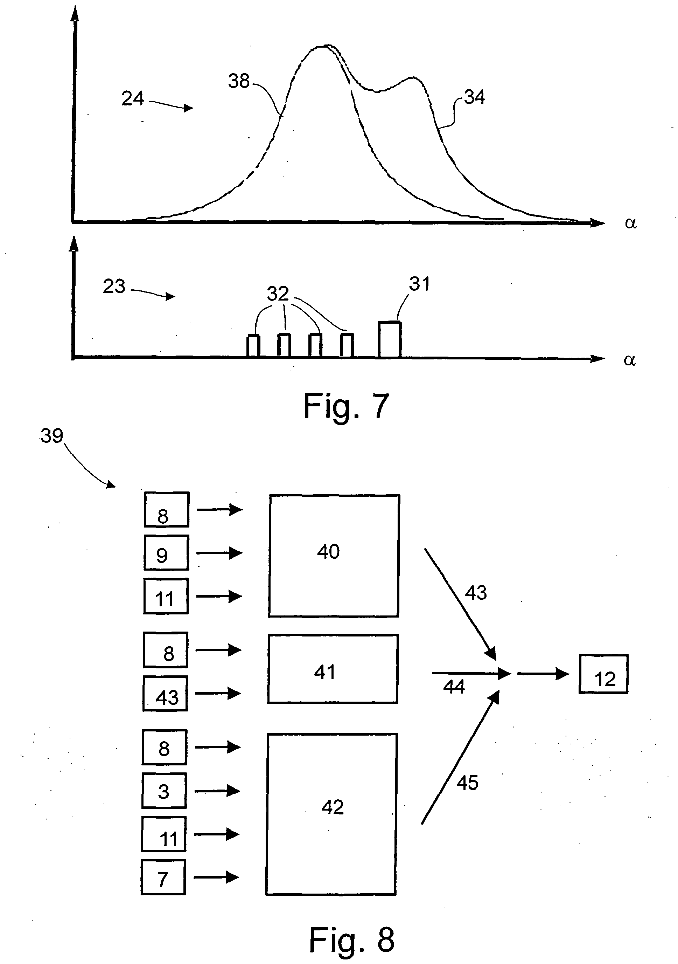

Fig. 7 zeigt eine vierte Einspritzcharakteristik 37. Diese ist beispielsweise zur Stabilisierung von sehr späten Haupteinspritzungen insbesondere in Betriebspunkten sehr kleiner Last oder bei einem Regenerationsbetrieb eines Dieselrußpartikelfilters vorgesehen. Dargestellt sind wiederum ein Druckverlauf 24 sowie ein Einspritzratenveriauf 23 in Abhängigkeit des Kurbelwellenwinkels α. Für eine günstige Mengenregelung zum homogenen Momentenaufbau sind mehrere Voreinspritzungen 32 sowie eine deutlich in Richtung "spät" verschobene Haupteinspritzung 31 vorgesehen. Damit ergibt sich ein korrigierter Druckverlauf 34, welcher gegenüber einem gewöhnlichen Druckverlauf 38 deutlich in Richtung "spät" verschoben ist. Dementsprechend verlagert sich ein nicht im Einzelnen dargestellter Verbrennungsschwerpunkt deutlich in Richtung "spät".

Fig. 8 zeigt schließlich ein viertes Signalflussschema 39. Dieses liegt einer Closed-Loop-Regelung einer Einspritzrate zugrunde. Im Einzelnen ist eine vierte, eine fünfte und eine sechste Regeleinheit 40, 41, 42 vorgesehen. Die vierte Regeleinheit 40 dient der Berechnung eines Startpunktes der Einspritzung. Die fünfte Regeleinheit 41 dient der Berechnung eines Starts der Einspritzratenänderung. Die sechste Regeleinheit 42 dient der Berechnung des Einspritzendes anhand eines Vergleichs des integrierten Endstufenausganges mit der gewünschten Kraftstoffmenge. Die jeweiligen Ausgangssignale 43, 44, 45 werden zu einem gesamten Steuersignal 12 verknüpft, welches zur Steuerung einer Einspritzvorrichtung dient. Als Eingangsgrößen liegen der vierten Regeleinheit 40 eine Einspritzcharakteristik 8, ein Einspritzbeginn 9 sowie ein Winkelgebersignal 11 zugrunde.

Der fünften Regeleinheit 41 wird eine Einspritzcharakteristik 8 sowie ein Brennbeginn 43 zugeführt. Der Brennbeginn wird beispielsweise mittels eines Drucksensors aus einem Druckanstieg in einem Brennraum ermittelt.

Der sechsten Regeleinheit 42 wird in einer Einspritzcharakteristik 8 ein Endstufenausgangssignal 3 ein Winkelgebersignal 11 sowie eine Einspritzmenge 7 als Eingangsgrößen zugeführt. Die Einspritzmenge 7 kann dabei beispielsweise mittels der dritten Regeleinheit gemäß dem dritten Signalflussschema bereitgestellt werden. Entsprechend kann der Einspritzbeginn 9 sowie die Einspritzcharakteristik 8 durch die zweite Regeleinheit gemäß dem zweiten Signalflussschema bereitgestellt werden.

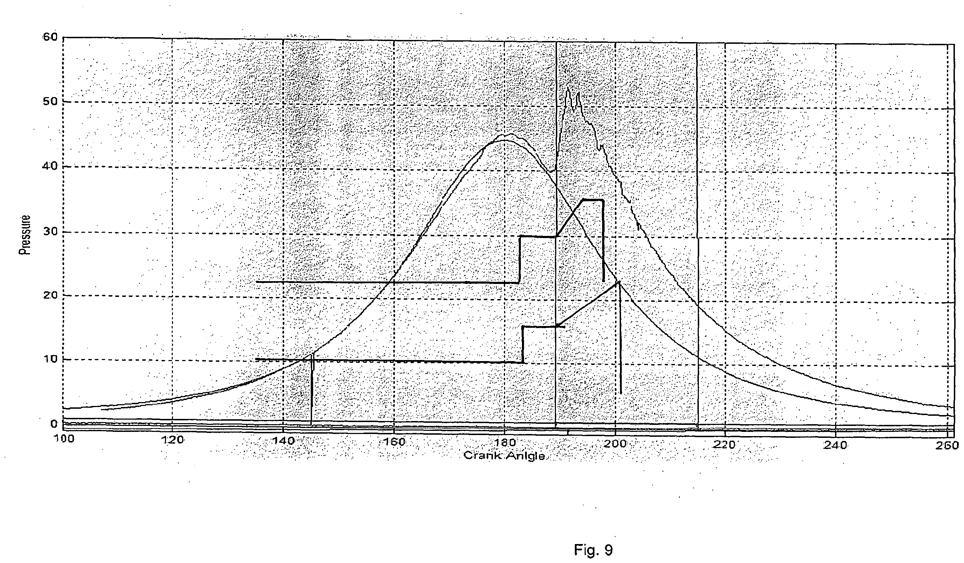

Fig. 9 zeigt eine Darstellung eines beispielhaften Regelablaufs durch Änderung einer Einspritzcharakteristik. Dieser Messschrieb zeigt den Druckverlauf in einem Zylinder bei 2000 U/min, wobei die eine Kurve sich ohne Regeleingriff ergibt, die andere hingegen aufgrund des Regeleingriffs eine Verschiebung in Richtung "spät" mit zusätzlichem Druckanstieg und dadurch sich ergebender Schwerpunktsverlagerung hinsichtlich der Verbrennung aufweist. Diese Stabilisierung einer sehr späten Haupteinspritzung bei kleiner Last wird durch eine Voreinspritzung erzielt, die einen rampenartigen Verlauf auf ein erstes Plateau aufweist. Dieses Plateauniveau wird gehalten, bevor eine Haupteinspritzung mit einer entsprechenden Steigung ausgehend von dem erreichten Plateauniveau startet. Zur besseren Übersichtlichkeit sind in den Messschrieb zwei verschiedene Einspritzverläufe eingezeichnet. Während der obere Verlauf der Einspritzung den tatsächlichen Verlauf wiedergibt, zeigt der darunter angeordnete Verlauf eine weitere besonders bevorzugte Ausgestaltung des Verlaufs. Während beim oberen Verlauf ein erstes und ein zweites Plateau zu erkennen sind, weist der untere Verlauf nur ein Plateau auf, von dem aus eine Steigerung der Einspritzrate bis annähernd zum Ende der Einspritzung folgt. Es hat sich als vorteilhaft herausgestellt, wenn im Rahmen der Regelung die Einspritzrate veränderbar an die jeweils im Zylinder vorliegende Situation angepasst wird. Hierzu kann insbesondere die Steigung der Einspritzrate angepasst werden. Die vorliegende Regelung erlaubt, dass innerhalb eines Zeitraums von weniger als 15 µs eine Änderung der Einspritzrate erfolgt. Insbesondere zeigt der Messschrieb, dass die Regelung in der Lage ist, nach Überschreiten eines ersten Druckmaximums über den geregelten Einspritzverlauf den Druck zu einem weiteren, insbesondere größeren Maximum führen zu können. Eine Änderung der Einspritzrate erfolgt vorzugsweise In einem Kurbelwellenbereich zwischen 170°KW und 210°KW. Sofern eine zweite Rampe, d.h. eine zweite Steigung im Einspitzratenverlauf vorgesehen ist, ist diese in einem Betriebsbereich vorzugsweise bis 3000 U/min in einem Bereich zwischen 180°KW und 205°KW angeordnet.

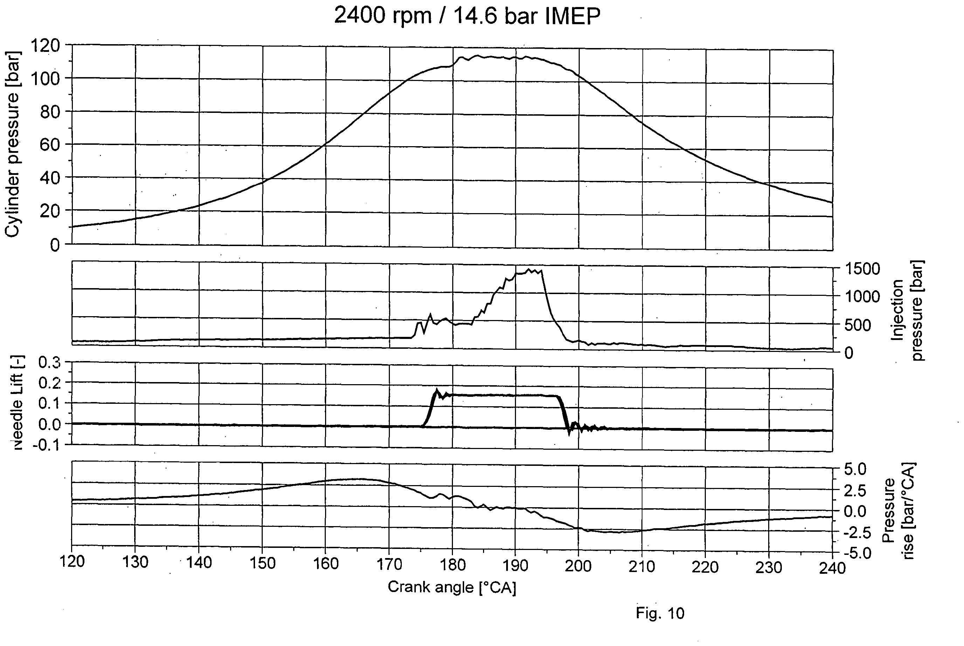

Fig. 10 zeigt eine Darstellung eines Zylinderdruckverlaufs, eines Einspritzdrucks, eines Nadelhubes einer Einspritzvorrichtung und einer relativen Druckänderung des Zylinderdruckes aufgetragen über den Kurbelwinkel. Die Messskurven sind bei 2400U/min aufgenommen worden, bei einem indizierten Mitteldruck von 14,6 bar. Die Regelung ermöglicht, den Einspritzdruck so einzustellen, dass eine Steigung mit Erreichen eines ersten Niveaus und sich daran anschließender zweiter Steigung ausgeführt wird, die in ein annähernd gleichmäßiges Niveau übergeht, bevor daran anschließend ein Abfallen auftritt. Ein Nadelhub wird gemäß dieser Ausgestaltung hierbei annähernd konstant gehalten, so dass insbesondere ein zur Verfügung stehender Auslassöffnungsbereich in etwa vollständig über annähernd den gesamten Einspritzverlauf genutzt wird. Über die Regelung des Druckverlaufs wird somit im Wesentlichen ein einzuspritzender Massenstrom beeinflusst. Wie des Weiteren aus dem Messschrieb zu entnehmen ist, kann die Einspritzung insbesondere so erfolgen, dass der Druck so wie dargestellt im Zylinder annähernd stetig bis zum Umkehrpunkt ansteigt und anschließend stetig fällt. Diese gleichmäßige Druckerhöhung erlaubt eine Verbesserung der Geräuschemissionen, da sprunghafte Änderungen vermieden werden, die wiederum Stör- und Geräuschentstehungsstellen anzeigen. Im Übrigen erlaubt das Verfolgen des Druckverlaufs die Möglichkeit, einen Start einer Verbrennung detektieren zu können, insbesondere aber auch ein Aussage über die Verbrennung selbst generieren zu können, zum Beispiel hinsichtlich ihrer Qualität und insbesondere hinsichtlich ihrer Übereinstimmung mit einer vorgebbaren Soll-Verbrennung. Vorzugsweise erlaubt die Anpassung und Regelung, dass NOx-Rohemissionen ohne eine Abgasrückführung Im Vergleich zu herkömmlichen bisherigen Standardbrennverfahren um etwa 2/3 abgesenkt werden können. Wird eine Abgasrückführung genutzt, kann diese ebenfalls in die Regelung miteingehen. Vorzugsweise durch eine Voreinstellung kann angepasst eine rückgeführte Rate berücksichtigt werden.

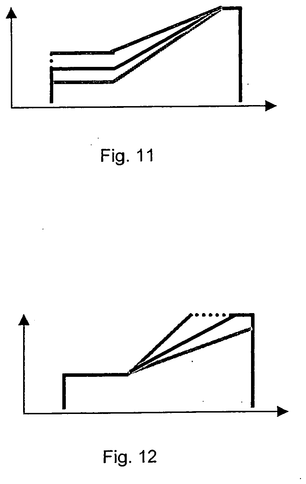

Fig. 11 zeigt eine-schematische Darstellung einer Regelung vorzugsweise einer Anfangsrate in Abhängigkeit von einer Last und von einem Druckanstieg. Entlang der Y-Achse verläuft eine Einspritzrate; die X-Achse gibt den Zeitverlauf an. Je nachdem, welch eine Last anliegt und wie sich ein Druckanstieg in einem Zylinder entwickelt, kann davon abhängig im gleichen oder zumindest im nächsten Zyklus die Regelung greifen und eine insbesondere voreingestellte Einspritzrate auf einen gewünschten Wert einstellen. Das kann so wie dargestellt bedeuten, dass die Anfangsrate abgesenkt oder erhöht wird. In einer weiteren Ausgestaltung kann vorgesehen sein, dass unterschiedliche Raten auf unterschiedlichen Niveauplateaus je Zylinder eingestellt werden. In Abhängigkeit von dem sich dadurch ergebenden tatsächlichen Ratenanstieg zu Beginn der Einspritzung wird die Restmenge des einzuspritzenden Kraftstoffes entsprechend angepasst im Weitern aufgeteilt eingespritzt. Dabei kann eine Anpassung eines Einspritzratenanstiegs vorteilhaft sein, so wie es beispielhaft mit den verschiedenen Steigungen auf ein Höchstplateau an Einspritzrate dargestellt ist. Es kann ebenso aufgrund der Regelung neben der Steigung auch der Zeitpunkt des Einsetzens einer erhöhten Einspritzrate nach vorn wie auch nach hinten individuell je Zylinder eingestellt werden.

Fig. 12: zeigt eine schematische Darstellung einer beispielhaften Regelung eines Einspritzratenanstiegs in Abhängigkeit von einer Restmenge, die vorzugsweise bei Brennbeginn festgestellt wird. Entlang der Y-Achse verläuft eine Einspritzrate; die X-Achse gibt den Zeitverlauf an. Die Restmenge kann sich insbesondere auch ändern, da aufgrund der Schnelligkeit der Regelung sich eine Änderung der Einspritzmenge auch noch während des Verbrennungsverlaufs einstellen kann, insbesondere im Vergleich zu einer Einspritzmenge zu Beginn. Aufgrund der Änderung der Restmenge kann sich daher ein Anstieg einer Einspritzrate ändern, entweder absenken oder ansteigen. Dadurch kann sich ein Plateau auf höherem Niveau noch ausbilden, so wie es gestrichelt angedeutet ist. Das höhere Plateau kann jedoch auf auch wegfallen, so wie es bei einem geringeren Anstieg angedeutet ist. Insbesondere kann eine Einspritzrate in ihrer maximalen Höhe sich auch ändern. Das bedeutet, dass beispielsweise ein Endwert einer Einspritzrate sich nach oben wie auch nach unten ändern kann. Damit einher kann ebenfalls ein Niveau eines Plateaus einer Einspritzrate geändert werden.

Neben den beispielhaften Darstellungen verschiedener Möglichkeiten der Regelung, eine Einspritzung an einen jeweiligen Zustand in Bezug auf einen Zylinder anzupassen, können auch andere Einspritzratenverläufe vorgesehen sein, die so nicht dargestellt sind. Diese können zum Beispiel ein oder mehrere unterschiedliche Absinkraten, mehrere Plateaus unterschiedlicher Höhe und/oder Einspritzratenverläufe ohne Plateaus beinhalten.

Eine Weiterentwicklung sieht vor, dass eine isobare Verbrennung eingeregelt werden kann. Insbesondere kann vorgesehen werden, dass bei einem Ottomotor zumindest teilweise zu einer isochoren Verbrennung eine isobare Verbrennung eingeregelt wird. Insbesondere bei einer Verbrennungskraftmaschine nach dem Diesel- oder Seiliger-Prozess wird eine isobare Verbrennung zumindest annähernd eingeregelt. Hierzu werden gemäß einer Ausgestaltung ein Einspritzbeginn und eine Anfangsrate der Einspritzung in Abhängigkeit vom jeweiligen Zylinderdruckverlauf geregelt.

## Patentansprüche

1. Verfahren zur Regelung eines Einspritzverlaufes (23) einer direkteinspritzenden Verbrennungskraftmaschine eines Fahrzeuges, bei der ein Brennstoff direkt in eine Brennkammer eingespritzt wird, wobei eine Starteinspritzung mit einer konstanten Einspritzrate und mit daran anschließender rampenförmig ansteigender Einspritzrate vorgesehen ist,
**dadurch gekennzeichnet, dass**
die Regelung eine Änderung des Einspritzverlaufes (23) zumindest während eines ersten Arbeitszyklus auf Basis zumindest eines während des ersten Arbeitszyklus aufgenommenen Parameters bewirkt, wobei der Parameter mit einem Brennverlauf gekoppelt ist und während des ersten Arbeitszyklus ermittelt wird, wobei der Parameter aus einem Druckverlauf in der Brennkammer während zumindest eines Abschnittes eines Zyklus ermittelt wird und aus dem Druckverlauf ein Brennbeginn in der Brennkammer detektiert wird, wobei die Einspritzrate bei dem detektierten Beginn der Verbrennung rampenförmig ansteigt, und wobei im Rahmen der Regelung die Einspritzrate veränderbar an die jeweils im Zylinder vorliegende Situation angepasst wird, wobei die Steigung der Einspritzrate angepasst wird.

2. Verfahren nach Anspruch 1, **dadurch gekennzeichnet, dass** auf Basis des aufgenommenen Parameters aus dem ersten Arbeitszyklus zumindest zusätzlich ein Einspritzverlauf (23) eines nachfolgenden Arbeitszyklus geändert wird, wobei die Regelung den Einspritzverlauf (23) im ersten und in einem direkt nachfolgendem zweiten Arbeitszyklus verändert.

3. Verfahren nach einem der vorhergehenden Ansprüche, **dadurch gekennzeichnet, dass** wenigstens ein für einen ersten Zylinder erzeugtes Steuersignal für eine Vorsteuerung einer Regelung eines Einspritzverlaufes wenigstens eines zweiten Zylinders verwendet wird.

4. Verfahren nach einem der vorhergehenden Ansprüche, **dadurch gekennzeichnet, dass** eine adaptive Regelung als Vorsteuerung genutzt wird, um eine Änderung des Einspritzverlaufes zu bewirken.

5. Verfahren nach einem der vorhergehenden Ansprüche, **dadurch gekennzeichnet, dass** eine Zylinderdrucküberwachung ausgeführt wird, um mittels dieser zumindest den aufgenommenen Parameter zu gewinnen, der in die Regelung eingeht und eine Änderung des Einspritzverlaufes (23) bewirkt wird.

6. Verfahren nach einem der vorhergehenden Ansprüche, **dadurch gekennzeichnet, dass** bei einem Schaltvorgang eines mit der Verbrennungskraftmaschine gekoppelten Getriebes die Regelung eine Änderung des Einspritzverlaufes (23) vornimmt.

7. Direkteinspritzende Verbrennungskraftmaschine eines Fahrzeuges mit zumindest einer Einspritzvorrichtung zur Einspritzung von Brennstoff in eine jeweilige Brennkammer des Fahrzeuges, mit einer Regeleinhelt (2; 14; 19; 40; 41; 42) zur Regelung der Einspritzung, welche eingerichtet ist ein Verfahren nach einem der vorhergehenden Ansprüche auszuführen, mit zumindest einem einer Brennkammer zugeordneten Sensor, der einen Parameter aufnimmt, der mit einem Brennverlauf in der Brennkammer gekoppelt ist, wobei der Sensor mit der Regeleinheit verbunden ist, wobei die Einspritzvorrichtung, die Regeleinheit und der Sensor jeweils derart kurze Reaktionszeiten aufweisen, dass deren Summe kleiner ist als eine Zeitdauer eines ersten Arbeitszyklus, in dem die Regeleinheit eine Regelung eines Einspritzverlaufes vornimmt, basierend auf zumindest dem durch den Sensor aufgenommenen Parameter.

8. Verbrennungskraftmaschine nach Anspruch 7, **dadurch gekennzeichnet, dass** die Regeleinheit (2; 14; 19; 40; 41; 42) mit einer Überwachung eines Partikelfilters verbunden ist, wobei die Regeleinheit (2; 14; 19; 40; 41; 42) den Einspritzverlauf zur Regenerierung des Partikelfilters anpasst.

9. Verbrennungskraftmaschine nach Anspruch 7 oder 8, **dadurch gekennzeichnet, dass** die Regeleinheit (2; 14; 19; 40; 41; 42) mit zumindest einer Emissionsüberwachung gekoppelt ist, wobei die Regeleinheit (2; 14; 19; 40; 41; 42) den Einspritzverlauf (23) zur Emissionsminderung anpasst.

10. Verbrennungskraftmaschine nach einem der Ansprüche 7 bis 9, **dadurch gekennzeichnet, dass** eine Zylinderdrucküberwachung vorgesehen ist, die mit der Regeleinheit (2; 14; 19; 40; 41; 42) gekoppelt ist.

## Claims

1. Method for the closed-loop control of an injection profile (23) of a direct-injection internal combustion engine of a vehicle in which a fuel is injected directly into a combustion chamber, wherein a starting injection with a constant injection rate and with an injection rate which immediately thereafter increases in ramped fashion is provided, **characterized in that**
the closed-loop control effects a change in the injection profile (23) at least during a first working cycle on the basis of at least one parameter recorded during the first working cycle, wherein the parameter is coupled to a combustion profile and is determined during the first working cycle, wherein the parameter is determined from a pressure profile in the combustion chamber during at least one section of a cycle, and a start of combustion in the combustion chamber is detected from- the pressure profile, wherein the injection rate increases in ramped fashion upon the detected start of the combustion, and wherein, in the context of the closed-loop control, the injection rate is variably adapted to the situation respectively prevailing in the cylinder, wherein the gradient of the injection rate is adapted.

2. Method according to Claim 1, **characterized in that**, on the basis of the recorded parameter from the first working cycle, at least additionally an injection profile (23) of a subsequent working cycle is changed, wherein the closed-loop control changes the injection profile (23) in the first and in a directly subsequent second working cycle.

3. Method according to one of the preceding claims, **characterized in that** at least one control signal generated for a first cylinder is used for pilot control in closed-loop control of an injection profile of at least one second cylinder.

4. Method according to one of the preceding claims, **characterized in that** adaptive closed-loop control is utilized as pilot control in order to effect a change in the injection profile.

5. Method according to one of the preceding claims, **characterized in that** cylinder pressure monitoring is performed in order, by means thereof, to obtain at least the recorded parameter, which is input into the closed-loop control and effects a change in the injection profile (23).

6. Method according to one of the preceding claims, **characterized in that**, during a shift process of a transmission coupled to the internal combustion engine, the closed-loop control performs a change in the injection profile (23).

7. Direct-injection internal combustion engine of a vehicle having at least one injection device for injecting fuel into a respective combustion chamber of the vehicle, having a closed-loop control unit (2; 14; 19; 40; 41; 42) for the closed-loop control of the injection, which closed-loop control unit is designed to carry out a method according to one of the preceding claims, having at least one sensor which is assigned to a combustion chamber and which records a parameter which is coupled to a combustion profile in the combustion chamber, wherein the sensor is connected to the closed-loop control unit, wherein the injection device, the closed-loop control unit and the sensor each have such short reaction times that the sum thereof is shorter than a duration of a first working cycle in which the closed-loop control unit performs closed-loop control of an injection profile based on at least the parameter recorded by means of the sensor.

8. Internal combustion engine according to Claim 7, **characterized in that** the closed-loop control unit (2; 14; 19; 40; 41; 42) is connected to a monitoring means of a particle filter, wherein the closed-loop control unit (2; 14; 19; 40; 41; 42) adapts the injection profile for the regeneration of the particle filter.

9. Internal combustion engine according to Claim 7 or 8, **characterized in that** the closed-loop control unit (2; 14; 19; 40; 41; 42) is coupled to at least one emissions monitoring means, wherein the closed-loop control unit (2; 14; 19; 40; 41; 42) adapts the injection profile (23) for the reduction in emissions.

10. Internal combustion engine according to one of Claims 7 to 9, **characterized in that** a cylinder pressure monitoring means is provided, which is coupled to the closed-loop control unit (2; 14; 19; 40; 41; 42).

## Revendications

1. Procédé de réglage d'un processus d'injection (23) d'un moteur à combustion interne à injection directe d'un véhicule, dans lequel un combustible est injecté directement dans une chambre de combustion, une injection de démarrage à une vitesse d'injection constante suivie d'une vitesse d'injection croissante en forme de rampe étant prévue,
**caractérisé en ce que**
le réglage provoque une modification du processus d'injection (23) du moins pendant un premier cycle opératoire sur la base d'au moins un paramètre relevé pendant le premier cycle opératoire, le paramètre étant couplé à un cycle de combustion et étant déterminé pendant le premier cycle opératoire, le paramètre étant déterminé à partir d'une évolution de la pression dans la chambre de combustion pendant au moins une partie d'un cycle et un début de combustion dans la chambre de combustion étant détecté à partir de l'évolution de pression, la vitesse d'injection montant en forme de rente au moment du début détecté de la combustion, et, dans le cadre du réglage, la vitesse d'injection étant adaptée de manière variable à la situation respectivement existante dans le cylindre, l'augmentation de la vitesse d'injection étant adaptée.

2. Procédé selon la revendication 1, **caractérisé en ce que**, sur la base du paramètre retenu dans le premier cycle opératoire, un processus d'injection (23) d'un site opératoire suivant est de surcroît modifié, le réglage modifiant le processus d'injection (23) dans le premier et dans un second cycle opératoire directement suivant.

3. Procédé selon une des revendications précédentes, **caractérisé en ce qu'**au moins un signal de commande généré pour un premier cylindre est utilisé pour une commande pilote d'un réglage d'un processus d'injection d'au moins un second cylindre.

4. Procédé selon une des revendications précédentes, **caractérisé en ce qu'**un réglage adaptatif est utilisé comme commande pilote pour provoquer une modification du processus d'injection.

5. Procédé selon une des revendications précédentes, **caractérisé en ce qu'**une surveillance de pression de cylindre est réalisée pour obtenir un moyen de celle-ci au moins le paramètre relevé qui intervient dans le réglage et qu'une modification du processus d'injection (23) est déclenchée.

6. Procédé selon une des revendications précédentes, **caractérisé en ce que**, en cas d'une opération de commutation d'une transmission couplée au moteur à combustion, le système de réglage procède à une modification du processus d'injection (23).

7. Moteur à combustion à injection directe d'un véhicule comportant au moins un dispositif d'injection pour l'injection de carburant dans une chambre de combustion du véhicule, comportant une unité de réglage (2 ; 14 ; 19 ; 40 ; 41 ; 42) pour régler l'injection et qui est conçue pour réaliser un procédé selon une des revendications précédentes,
comportant au moins un capteur associé à une chambre de combustion et qui relève un paramètre qui est couplé à un processus de combustion dans la chambre de combustion, le capteur étant connecté à l'unité de réglage, le dispositif d'injection, l'unité de réglage et le capteur présentant respectivement des temps de réaction assez courts pour que leur somme soit inférieure à une durée d'un premier cycle opératoire dans lequel l'unité de réglage procède à un réglage d'un processus d'injection en se basant au moins sur le paramètre relevé par le capteur.

8. Procédé selon la revendication 7, **caractérisé en ce que** l'unité de réglage (2 ; 14 ; 19 ; 40 ; 41 ; 42) est connectée à un système de surveillance d'un filtre à particules, l'unité de réglage (2- ; 14 ; 19 ; 40 ; 41 ; 42) adaptant le processus d'injection pour régénérer le filtre à particules.

9. Procédé selon la revendication 7 ou 8, **caractérisé en ce que** l'unité de réglage (2 ; 14 ; 19 ; 40 ; 41 ; 42) est couplée au moins à un système de surveillance d'émissions, l'unité de réglage (2 ; 14 ; 19 ; 40 ; 41 ; 42) adaptant le processus d'injection (23) pour réduire les émissions.

10. Procédé selon une des revendications 7 à 9, **caractérisé en ce qu'**il est prévu un système de surveillance de pression de cylindre qui est couplé à l'unité de réglage (2 ; 14 ; 19 ; 40 ; 41 ; 42).
